# EUROPEAN PATENT APPLICATION

(11) **EP 1 850 493 A2**
(43) Date of publication of application: **31.10.2007**
(21) Application number: 06123636.0
(22) Date of filing: 07.11.2006
(51) Int. Cl.: H04B 1/56, H04L 27/26

(54) **Communication apparatus based on multi-carrier modulation system with simultaneous transmission and reception in the same frequency band**

(30) Priority: 25.04.2006 JP 2006120151
(71) Applicant: FUJITSU LIMITED, Kawasaki-shi, Kanagawa 211-8588 (JP)
(72) Inventor: Sawada, Kensuke, Kawasaki-shi, Kanagawa 211-8588 (JP)
(74) Representative: Hitching, Peter Matthew

(57) **Abstract**

A communication apparatus based on a multi-carrier modulation system performs simultaneous communications using a plurality of sub-carriers modulated with data respectively. The apparatus comprises a transmitting unit (1) operable to transmit data with a plurality of sub-carriers by modulating some sub-carriers among the plurality of sub-carriers with data, and operable to use the other sub-carriers of the plurality of sub-carriers as a receiving band (3) without modulation with the data. Such a communication apparatus may be included in a mobile station or a base station for simultaneous transmission and reception with a simplified structure between the mobile station and base station using in common the same frequency band.

## Description

The present invention relates to a communication apparatus based on multi-carrier modulation system for two-way communication using a plurality of sub-carriers and more specifically to a communication apparatus based on a multi-carrier modulation system for enabling simultaneous transmission and reception by avoiding interference from the other communication apparatuses, for example, base stations or mobile stations or preventing diffusion of the transmitting signal of a station to the receiving side of that station.

Conventional mobile communications where various kinds of mobile communications with mobil e stations, such as portable phones or the like, have been put into practical use in recent years have basically used the same communication system as that used for communications with fixed stations.

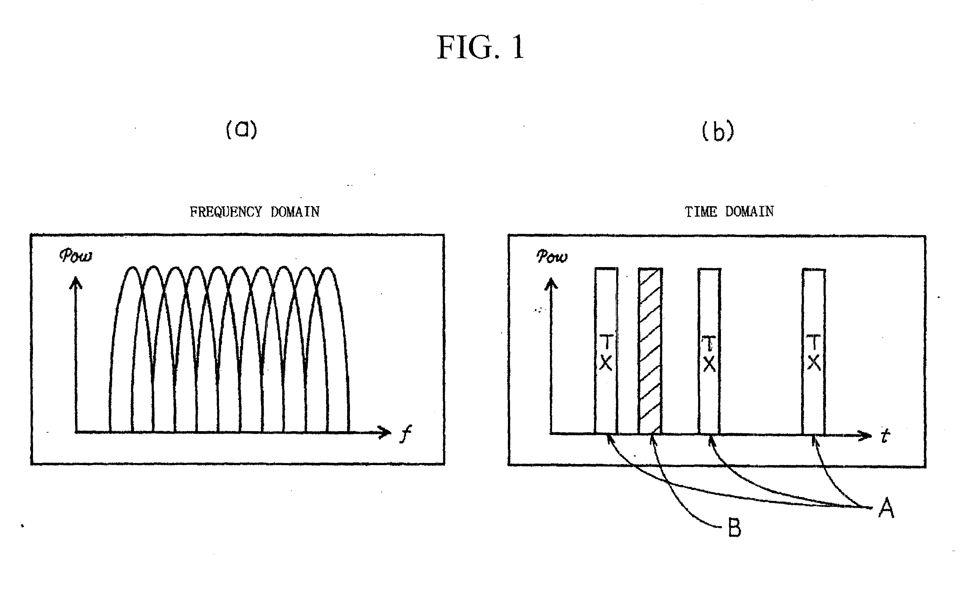

For example, Figs. 1 illustrates an application example where there is no problem in the frequency domain and the time domain for transmission and reception between a plurality of mobile stations and a fixed station. Fig. 1 (a) illustrates the example where a mobile station is capable of realizing data communication with the other mobile stations and fixed stations with single transmissions using all frequency bands. Frequency is plotted on the horizontal axis f, while power of each sub-carrier is on the vertical axis Pow. Fig. 1(b) illustrates an example for shifting the transmission timings in order to eliminate overlap thereof within the time domain in each mobile station or fixed station. The horizontal axis t indicates the time and the vertical axis Pow, the power of each sub-carrier.

In summary, Fig. 1 (b) illustrates the case where if data is transmitted simultaneously from a plurality of mobile stations and a fixed station, data reception is disabled because the transmitting data are mixed with each other and therefore a certain mobile station transmits the data in the timing A as the transmission timing and the other mobile station or fixed station shifts the transmission timing to transmit the data in the other timing B by detecting that a certain mobile station transmits the data in the transmission timing A.

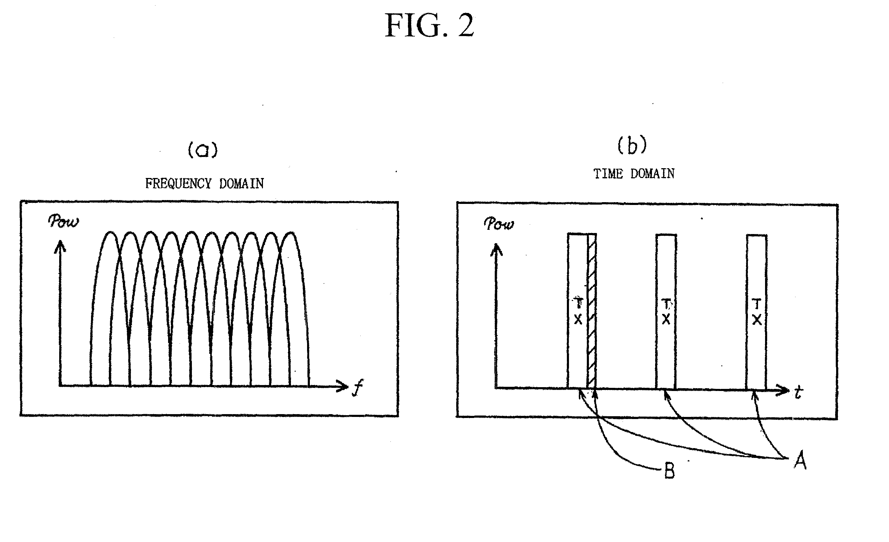

Fig. 2 illustrates an application example where there is a problem in the time domain for transmission and reception between a plurality of mobile stations and a fixed station using the frequency domain explained in regard to Fig. 1. Description of Fig. 2(a) is omitted because the application example of the other mobile station is same as that of Fig. 1(a). Fig. 2(b) illustrates an example where the other mobile station or fixed station cannot sense the carrier of transmission in the transmission timing A from a certain mobile station and transmits data in the transmission timing B the same as the transmission timing A and thereby the transmission timing B is matched with the timing A. Accordingly, a certain mobile station cannot receive the important data from the other mobile station or fixed station.

Moreover, JP-A 2001-285236 proposes a transmitting circuit for multi-carrier modulation system for eliminating interference by transmission from the other mobile station or fixed station like that in Fig. 2 explained above.

The transmitting circuit described in JP-A 2001-285236 will be explained with regard to Fig. 3.

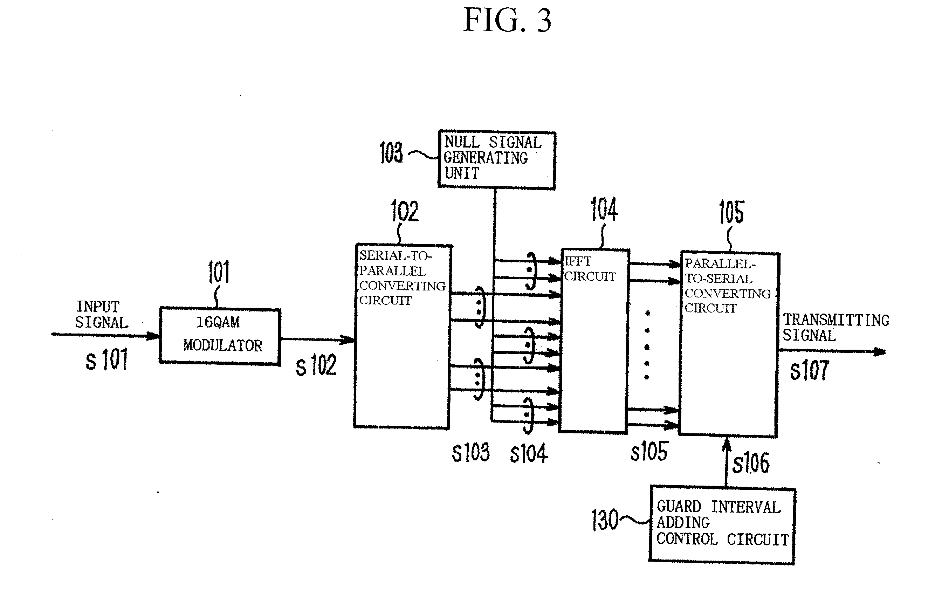

In Fig. 3, an input signal s101 is input to a 16 QAM modulating circuit 101 and thereby the modulated signal s102 is obtained. The modulated signal s102 is then input to a serial-to-parallel converting circuit 102 and thereby a sub-carrier modulated signal s103 is output. A null signal generating circuit 103 outputs the null signal s104 having the value 0 for both Ich and Qch. The sub-carrier modulated signal s103 divided for each sub-carrier and the null signal s104 are input to an IFFT circuit 104 and thereby the OFDM signal s105 can be output through the OFDM modulation. Here, the null signal is input to the IFFT point corresponding to both end edges of the transmission frequency band and to the point corresponding to the frequency band of the other system provided for common use in view of eliminating returning of the transmitting spectrum in the circuit stages higher than the IF stage.

As explained above, the IFFT circuit 104 corresponds to a multi-carrier modulating means. The OFDM signal s105 is input to the parallel-to-serial converting circuit 105. Here, the control signal s106, which is an output signal of a guard interval addition control circuit 130 provided to control the read sequence of the parallel-to-serial converting circuit 105 is also input to control the read sequence of the parallel-to-serial converting circuit 105. Accordingly, the guard interval read out by repeating a part of the output signal of the IFFT circuit 104 is added to the OFDM signal to generate the OFDM symbol and thereby it is output as the transmitting signal s107.

However, JP-A 2001-285236, explained above only nulls the particular sub-carriers but does not consider reception of the desired signal simultaneously with transmission of signals. Therefore, JP-A 2001-285236 explained above still includes a problem that the receiving signal to be received with the sub-carrier, where the side-lobe element of its own sub-carrier to be transmitted is nulled, is suppressed.

It is desirable to provide a communication apparatus based on the multi-carrier modulation system to be mounted into a mobile station or a base station for simultaneously transmitting and receiving signals with a simplified structure with mobile stations and base stations using in common the same frequency band.

According to a first aspect of the present invention, a communication apparatus based on the multi-carrier modulation system for simultaneous communications with a plurality of sub-carriers attained by modulating respective sub-carriers with data is used, wherein a transmitting unit is further included to transmit data with a plurality of sub-carriers by modulating a part of sub-carriers among a plurality of sub-carriers with data and then using the other sub-carriers as the receiving band without modulation with data.

According to a second aspect of the present invention, there is provided a communication apparatus based on the multi-carrier modulation system for simultaneous communications with a communication apparatus of a distant party with a plurality of sub-carriers where respective sub-carriers are modulated with data, wherein a transmitting unit is included to modulate a plurality of said sub-carriers with data and then transmit the modulated sub-carriers when the communication apparatus is located in the area far from the communication apparatus of the distant party and to set the data from the communication apparatus of the distant party to the receiving band and to transmit the data with a plurality of sub-carriers by modulating a part of a plurality of sub-carriers with the data and without modulation of the other sub-carriers with the data when the mobile communication apparatus is located in the area near the communication apparatus of the distant party.

A communication apparatus embodying the present invention may be further provided with an adding unit to transmit additional guard band in addition to a plurality of sub-carriers and a removing unit for removing the guard band added to the receiving signal.

A communication embodying the present invention may be further provided with an active filter for dynamically changing the pass-band to pass only a plurality of sub-carriers to transmit the data.

In one embodiment, null-modulation of the sub-carriers other than the sub-carriers modulated with the data is used.

A communication apparatus embodying the present invention may select and set a part of the sub-carriers and the other sub-carriers among a plurality of sub-carriers on the basis of received control information.

According to a third aspect of the present invention, there is provided a communication apparatus based on the multi-carrier modulation system, wherein an inserting unit for inserting the null signal having the value 0 for both real numbers and imaginary numbers, a serial-to-parallel converting means for converting serial-to-parallel conversion to the transmitting data including the null signal and then outputting the parallel transmitting data, a sub-carrier modulating means for performing sub-carrier modulation to respective parallel transmitting data, a multi-carrier modulating means for performing multi-carrier modulation to the sub-carrier modulated signal input from a plurality of sub-carrier modulating means and then outputting the multi-carrier modulated signal and an adding means for adding the guard interval to the multi-carrier modulated signal are included, and the inserting unit determines the number of null signals to be inserted and inserting position on the basis of the control information for assignment of frequencies from an external side and then inserts the null signal to the transmitting data.

According to a fourth aspect of the present invention, there is provided a communication apparatus based on the multi-carrier modulation system, comprising an inserting unit for inserting the null signal having the value 0 for both real numbers and imaginary numbers into the transmitting data, a serial-to-parallel converting means for performing serial-to-parallel conversion to the transmitting data including the null signal and then outputting the parallel transmitting data, a sub-carrier modulating means for performing the sub-carrier modulation to respective parallel transmitting data, a multi-carrier modulating means for performing the multi-carrier modulation to the sub-carrier modulated signal input from a plurality of sub-carrier modulating means and then outputting the multi-carrier modulated signal, an adding means for adding the guard interval to the multi-carrier modulated signal, and a size changing means for changing the processing size to be used for modulation of the multi-carrier modulating means on the basis of the control information in regard to assignment of frequency from the external side.

A preferred embodiment of the present invention can provide a communication apparatus capable of obtaining excellent receiving characteristics in its own station and in other stations without any suppression of the desired receiving signal to its own station or to the other stations with the side-lobe element of the sub-carriers due to the transmission by simultaneously performing transmission and reception in the multi-carrier modulation system.

Reference will now be made, by way of example, to the accompanying drawings, in which:

Figs. 1(a) and (b) together present an application example in the case where there is no problem in the frequency domain and time domain in transmission and reception between a plurality of mobile stations and a fixed station.

Figs. 2(a) and (b) together present an application example in the case where there is a problem in the frequency domain and time domain in transmission and reception between a plurality of mobile stations and a fixed station.

Fig. 3 is an exemplary block diagram showing a structure of a prior transmitting circuit for multi-carrier modulation system.

Figs. 4(a) and (b) together present an exemplary diagram showing a principle of a communication system embodying the present invention.

Fig. 5 shows parts of a communication apparatus based on the multi-carrier modulation system according to a first embodiment of the present invention.

Fig. 6 is a schematic diagram for illustrating an example of receiving a command.

Fig. 7 is a block diagram showing in more detail than Figure 5 parts of the Figure 5 apparatus.

Fig. 8 is a block diagram showing in more detail than Figure 5 further parts of the Figure 5 apparatus.

Fig. 9 shows parts of a communication apparatus based on the multi-carrier modulation system according to a second embodiment of the present invention.

Fig. 10 is an exemplary diagram showing in more detail than Figure 9 parts of the Figure 9 apparatus.

The preferred embodiments of the present invention will be explained with reference to the accompanying drawings. However, the preferred embodiments do not restrict the technical scope of the present invention.

In the preferred embodiments of the present invention, a communication apparatus based on the multi-carrier modulation system will be explained below.

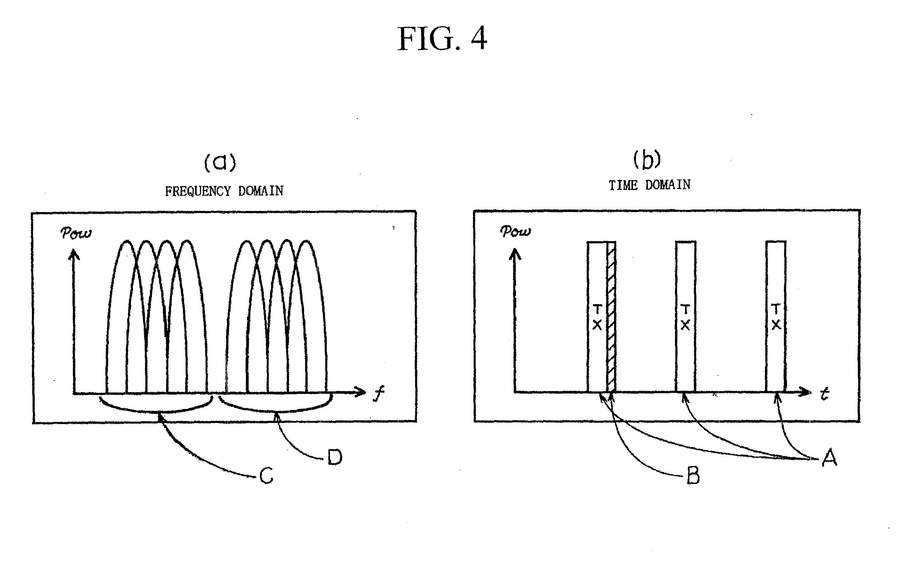

Fig. 4 illustrates a principle of a communication system embodying the present invention.

Letter C in Fig. 4 (a) indicates the frequency band used for transmission in the frequency domain of a communication apparatus embodying the present invention. Letter D in Fig. 4(a) indicates the receiving frequency band. Letter A in Fig. 4(b) indicates the transmission timing in the time domain of the communication apparatus embodying the present invention. Letter B in Fig. 4(b) indicates the transmission timing from the other mobile station or base station. In a communication apparatus embodying the invention, diffusion of the transmitting signal to the receiving unit by the apparatus itself can be prevented and transmission can be realized without consideration of the transmission timing of the other communication apparatus, because the frequency band is assigned to sub-carriers for transmission and reception.

Next, a detailed structural example of a communication apparatus embodying the present invention will be explained below.

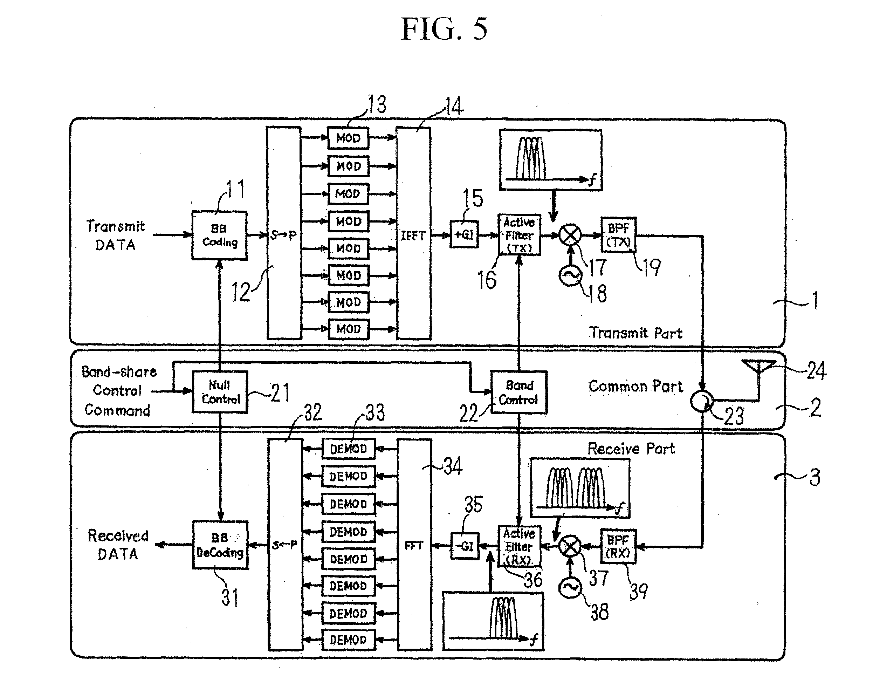

Fig. 5 illustrates a structural example of the communication apparatus based on the multi-carrier modulation system as the first embodiment of the present invention. The communication apparatus is roughly formed of a transmitting unit 1, a common unit 2, and a receiving unit 3. The transmitting unit 1 includes a BB coding unit 11, a serial-to-parallel S/P converting unit 12, a modulating unit (MOD) 13, an IFFT unit 14, a guard interval adding unit 15 (+GI), an active filter 16, a frequency converting circuit 17, a local oscillator 18 and a band-pass filter (BPF) 19.

The common unit 2 includes a null control unit 21, a band control unit 22, a circulator 23, and an antenna 24.

The receiving unit 3 includes, in the sequence of transfer of the receiving signal, a band-pass filter 39, a local oscillator 38, a frequency converting circuit 37, an active filter 36, a guard interval removing unit (-GI) 35, an FFT 34, a demodulating unit 33, a parallel-to-serial P/S converting unit 32, and a BB decoding unit 31.

Operation of each unit in the communication apparatus explained above will be explained below.

The BB coding unit 11 inserts a null symbol into the transmitting data in units of symbols with the control signal from the null control unit 21 and outputs the transmitting data including the null 1 symbol 1 to the S/P converting unit 12 as the coded data. This null symbol indicates the null symbol 1 formed of the signal having the value 0 for the real number element and the imaginary number element. The S/P converting unit 12 outputs the coded data to each modulating unit 13 through the parallel conversion. The converting unit 13 performs multi-level modulation on the parallel-converted data of each sub-carrier from the S/P converting unit 12 and outputs the sub-carrier modulated data to the IFFT unit 14. The IFFT unit 14 applies OFDM-modulation through inverse Fourier transformation of the sub-carrier modulated data and outputs an OFDM signal. The guard interval adding unit 15 outputs, to the active filter 16, an OFDM symbol to which a guard interval has been added. The addition of the guard interval is achieved by repeating a part of the OFDM signal to the OFDM signal. The active filter 16 outputs, to the frequency converting circuit 17, an OFDM symbol in which the side-lobe by the sub-carrier of the OFDM symbol is cut in dependence upon the control signal from the band control unit 22. The frequency converting circuit 17 up-converts an output of the active filter 16 with the local oscillating signal of the local oscillator 18. The band-pass filter 19 outputs an output from the frequency converting circuit 17 to the circulator 23 through filtering to a predetermined frequency band. The antenna 24 transmits an output signal from the circulator 23 as an electromagnetic wave. The band-pass filter 39 outputs a receiving signal obtained via the antenna 24 and circulator 23 to the frequency converting circuit 37 as the receiving signal of the predetermined frequency band. The frequency converting circuit 37 outputs the receiving signal to the active filter 36 through the down-conversion with the local oscillating signal from the local oscillator 38. The active filter 36 outputs, to the guard interval-removing unit 35, an OFDM symbol in which the side-lobe due to the sub-carrier of the OFDM symbol of the receiving frequency band is cut in dependence upon the control signal from the band control unit 22. The guard interval-removing unit 35 removes the guard interval from the OFDM symbol and provides an output to the FFT 34. The FFT 34 outputs, to the demodulating unit 33, a sub-carrier modulated symbol frequency-converted through Fourier transformation of the OFDM symbol from which the guard interval is removed. The demodulating unit 33 demodulates the sub-carrier modulated symbol attained through multi-level modulation and outputs this sub-carrier demodulated symbol to the P/S converting unit 32 as the baseband symbol. The P/S converting unit 32 applies serial conversion to the demodulated parallel baseband symbol from a plurality of demodulating units 33 and outputs a series of baseband symbols to the BB decoding unit 31. The BB coding 31 removes the inserted null symbol in dependence upon the control signal from the null control unit 21 and outputs the receiving data.

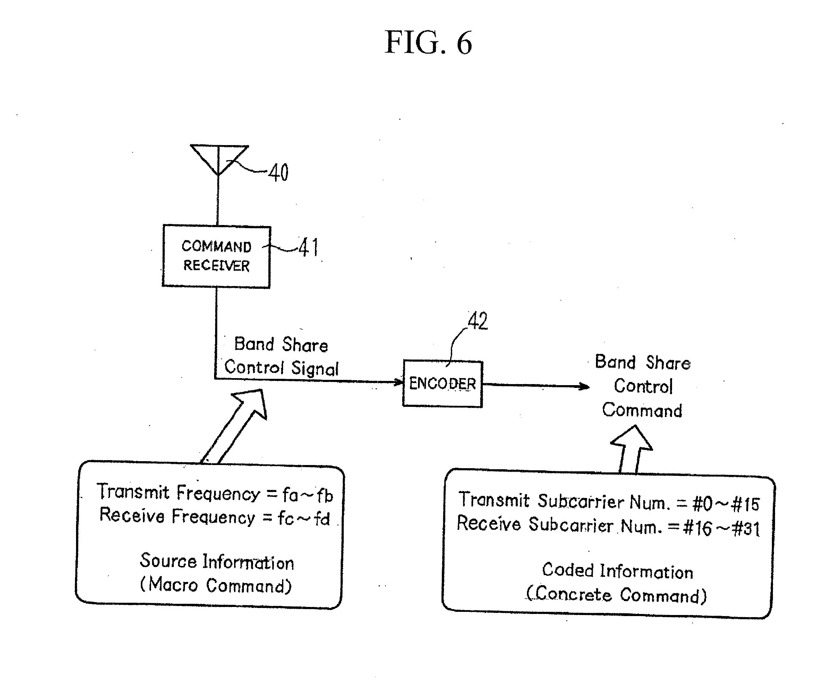

The null control unit 21 issues a command for designating the part for inserting and removing the null symbol in dependence upon a band-share control command, while the band control unit 22 issues a command for designating the sub-carrier for transmission and reception in dependence upon the band-share control command. A receiving example of such a command will be explained with reference to Fig. 6. First, the command receiving unit 41 outputs the band-share control signal to an encoder 42 from the receiving signal received via the antenna 40. The band-share control signal is the source information (macro-command) in the transmitting frequencies fa and fb and in the receiving frequencies fc and fd. The encoder 42 outputs the band-share control signal as the code information of the band-share control command. The band-share control command is the encoding information (concrete command) for designating the sub-carrier numbers #0 to #15 for transmission and the sub-carrier numbers #16 to #31 for reception.

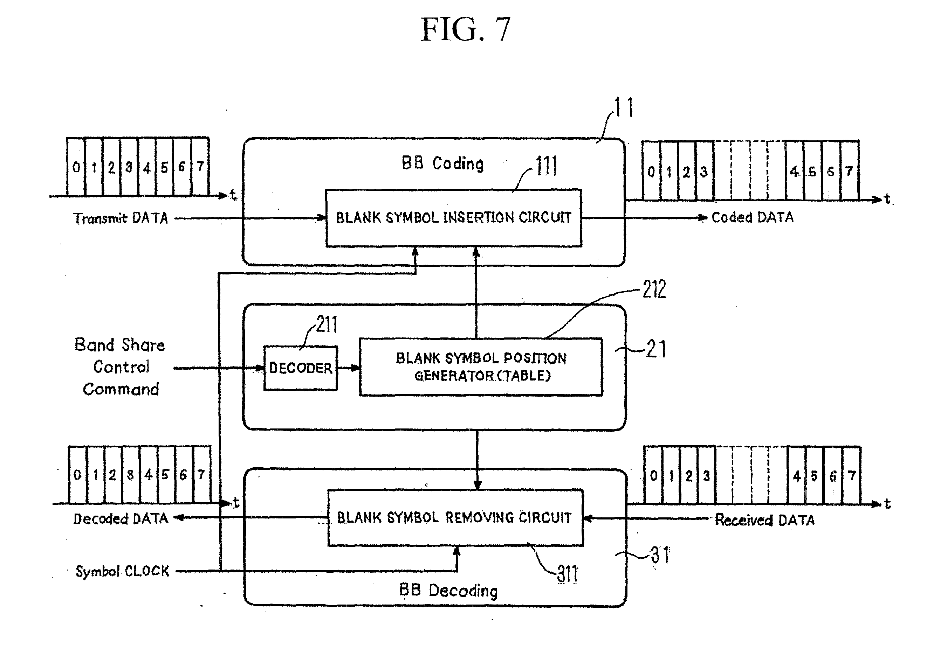

Fig. 7 illustrates detailed structural examples of the BB coding, BB decoding and null control units. For example, in Fig. 7, the transmitting data is formed of eight symbols, one symbol corresponds to one sub-carrier, and the eight sub-carriers in maximum are provided as the transmitting/receiving frequency band.

A blank symbol inserting circuit 111 within the BB coding 1 inserts the transmitting data of eight symbols, also inserts four continuous null symbols after the transmitting-data symbols having numbers 0 to 3 based on the blank symbol position information from the blank symbol position generating unit 212 within the control unit 21, and then outputs the coded data. The blank symbol position generating unit 212 generates a control signal to indicate a null symbol inserting position and a null symbol removing position in dependence upon information obtained by a decoder 211 which decodes the band-share control command a decoder 211 and then supplies this control signal to the blank symbol inserting circuit 111 and the blank symbol removing circuit 311. The blank symbol removing circuit 311 within the BB decoding unit 31 removes the null symbols between the symbol numbers 0 to 3 and the symbol numbers 4 to 7 of the receiving data and outputs the decoded data.

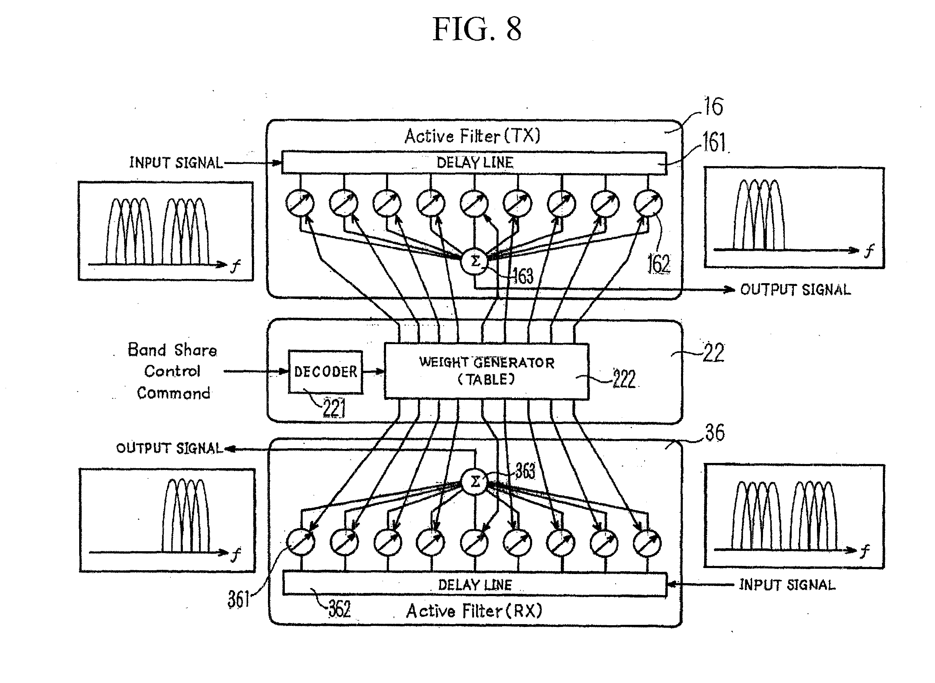

Fig. 8 illustrates detailed structural examples of the active filter and band control unit.

Here, as the input signal to be input to the active filter 16, the full frequency band of eight sub-carriers is usually used for transmission. Moreover, in the irregular case, for example, when a mobile station enters a certain area to realize transmission and reception using eight sub-carriers, it is assumed that four sub-carriers are used for transmission and the remaining four sub-carriers are used for reception in order to realize simultaneous transmission and reception. In the usual case, a mobile station is making communication, for example, using the full frequency band with the other mobile station. In the irregular case, it is assumed that a mobile station is coming near to the base station to change the transmission mode to the transmission with a half frequency band of the full frequency band from the transmission with the full frequency band with the other mobile station and simultaneously to always receive the signal from the base station with the remaining half frequency band.

The input signal to the active filter 16 (transmitting side) is used in four sub-carriers for transmission and the other four sub-carriers indicate the side-lobe or noise by the sub-carriers for transmission. In this input signal, any sub-carrier has different amplitude and the amplitude of the right side four sub-carriers indicating side-lobe or noise is smaller than that of the left side four sub-carriers used for transmission. The right side four sub-carriers indicating this side-lobe or noise is removed with the active filter 16 (transmitting side).

The active filter 16 (transmitting side) equalizes waveforms of the input signal (here, eight sub-carriers) with a delay line 161, a plurality of taps 162, and an adder 163 and outputs the output signal with restriction to the necessary sub-carriers (here, left side four sub-carriers are necessary sub-carriers). The tap 162 is controlled with a plurality of weighting coefficient from a weighting coefficient-generating unit 222 of the band control unit 22.

The active filter 36 (receiving side) equalizes waveforms of the input signal (here, eight sub-carriers) when the full frequency band is used with a delay line 362, a plurality of taps 361, and an adder 363 and outputs the output signal with restriction to the necessary sub-carriers. In addition, the weighting coefficient-generating unit 222 reads the weighting coefficient values for transmission and reception stored in the table and controls the respective taps 162 and 361 on the basis of the value obtained by decoding the band-share control command with the decoder 221.

Another example other than that explained above may also be considered. Namely, the transmission and reception are performed by sharing the time in place of the common transmission and reception in the frequency band explained in above example.

In this case, control is executed to set the taps 162 and 361 to the same value so that the active filters 16 and 36 do not restrict the frequency band with equalization of waveform.

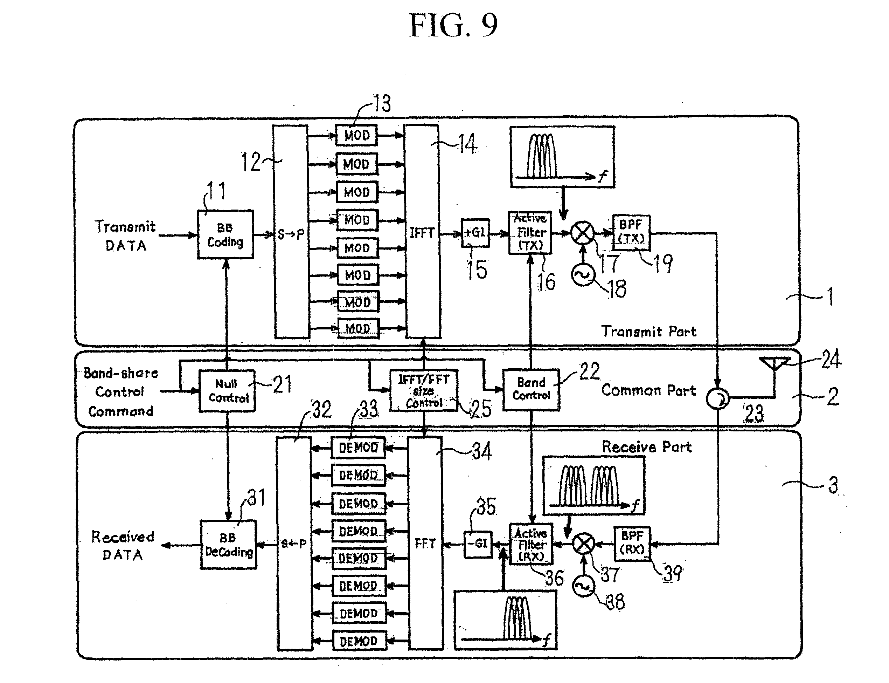

Fig. 9 illustrates an example of structure of the communication apparatus based on the multi-carrier modulation system as a second embodiment of the present invention. In this structure example, the like reference numbers are designated to the like structure element. Since the operating processes are similar in these elements, no description will be given of such similar operating processes and only different structure elements will be explained.

In the structure example of the communication apparatus as the second embodiment of the present invention, an IFFT/FFT size control unit 25, which is not provided in the structure example of the communication apparatus as the first embodiment, is additionally provided.

This IFFT/FFT size control unit 25 is capable of changing a sample size of the IFFT unit 14 and FFT unit 34 by receiving the band-share control command. For example, the 256 sample size is changed to a half sample size of 128 sample size or vice versa.

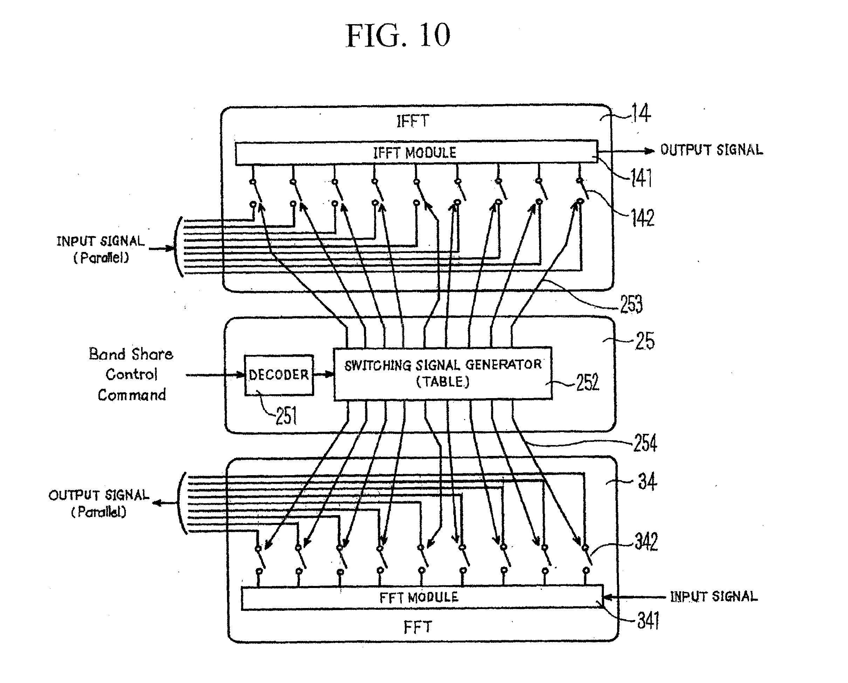

A detail structure example of the IFFT/FFT size control unit of the present invention is illustrated in Fig. 10. Operations of the detail structure example of Fig. 10 will be explained below.

A switching signal-generating unit 252 reads the switching signal for IFFT stored in a table based on the value obtained by decoding the band-share control command with the decoder 251 and then outputs this switching signal to the IFFT unit 14 via the control line 253.
Simultaneously, the switching signal-generating unit 252 also reads the switching signal for FFT stored in the table on the basis of the value obtained by decoding the band-share control command with the decoder 251 and then outputs this switching signal to the FFT unit 34 (FFT module) via the control line 254. In the IFFT unit 14, a switch 142 is turned ON/OFF with the switching signal for IFFT and the IFFT module 141 receives the parallel input signal from the switch 142 in the ON state and outputs the OFDM signal.

The FFT unit 34 executes the frequency conversion of the received serial signal and outputs the frequency-converted signal only to the switch 342 turned ON with the switching signal for the receiving FFT.

Embodiments of a communication apparatus according to the present invention have been explained above but various changes or modifications to the apparatus explained above are possible within the scope of the invention as defined by the appended claims.

## Claims

1. A communication apparatus based on a multi-carrier modulation system for simultaneous communications using a plurality of sub-carriers modulated with data respectively, comprising:
a transmitting unit operable to transmit data with a plurality of sub-carriers by modulating a sub-carrier among the plurality of sub-carriers with data, and operable to use the other sub-carriers as a receiving band without modulation with the data.

2. The communication apparatus based on the multi-carrier modulation system according to claim 1, wherein the transmitting unit further comprises:
an adding unit operable to transmit a guard band in addition to a plurality of the sub-carriers; and
a removing unit operable to remove a guard band added to a received signal.

3. The communication apparatus based on the multi-carrier modulation system according to claim 1 or 2, wherein the transmitting unit further comprises:
an active filter operable to dynamically change the pass-band to allow transmission of only a selected plurality of sub-carriers for transmission of data.

4. The communication apparatus based on the multi-carrier modulation system according to any preceding claim, wherein:
the sub-carriers other than the sub-carriers modulated with the data are null modulated.

5. The communication apparatus based on the multi-carrier modulation system according to any preceding claim, wherein:
two of the sub-carriers or the other sub-carriers among a plurality of the sub-carriers is selected on the basis of the control information received.

6. Communication apparatus comprising:
an inserting unit operable to insert into the transmitting data a null signal whose real and imaginary parts are both 0;
a serial-to-parallel converting unit operable to output parallel transmitting data by performing serial-to-parallel conversion on the transmitting data including the null signal;
a plurality of sub-carrier modulating units operable to perform sub-carrier modulation on respective parts of the parallel transmitting data to produce respective sub-carrier modulation signals;
a multi-carrier modulating unit operable to apply multi-carrier modulation to the sub-carrier modulation signals input from the plurality of sub-carrier modulating units and to output a multi-carrier modulation signal; and
an adding unit operable to add a guard interval to the multi-carrier modulation signal,
wherein the inserting unit is further operable to determine a number of null signals to be inserted and an inserting position at which to insert the null signal into the transmitting data based on control information for assignment of frequency received from an external device.

7. A communication apparatus based on the multi-carrier modulation system, comprising:
an inserting unit operable to insert into the transmitting data a null signal whose real and imaginary parts are both 0;
a serial-to-parallel converting unit operable to output parallel transmitting data by performing serial-to-parallel conversion on the transmitting data including the null signal;
a plurality of sub-carrier modulating units operable to perform sub-carrier modulation on respective parts of the parallel transmitting data to produce respective sub-carrier modulation signals;
a multi-carrier modulating unit operable to apply multi-carrier modulation to the sub-carrier modulation signals input from the plurality of the sub-carrier modulating units and to output a multi-carrier modulation signal;
an adding unit operable to add a guard interval to the multi-carrier modulation signal; and
a size-changing unit operable to change a processing size to be used for modulation by the multi-carrier modulating means on the basis of control information for assignment of frequency received from an external device.

8. A communication apparatus based on a multi-carrier modulation system for simultaneous communications with a mobile station or a base station using a plurality of sub-carriers modulated with data, comprising:
a transmitting unit operable to modulate the plurality of sub-carriers with data and transmit the sub-carriers to said mobile station, when the claimed communication apparatus is located far from the said base station, and
further operable, when the claimed communication apparatus is located near to said base station, to transmit data to said mobile station using modulation of a part of a plurality of the sub-carriers with the data and without using modulation of the remaining sub-carriers with the data and to receive data from said base station with said remaining sub-carriers.
